# EUROPEAN PATENT SPECIFICATION

(11) **EP 4 040 123 B1**
(45) Date of publication and mention of the grant of the patent: **21.10.2026**
(21) Application number: 22154175.8
(22) Date of filing: 31.01.2022
(51) Int. Cl.: G01J 5/02, G01J 5/00

(54) **NON-CONTACT INFRARED THERMOMETER**
BERÜHRUNGSLOSES INFRAROTTHERMOMETER
THERMOMÈTRE À INFRAROUGES SANS CONTACT

(30) Priority: 05.02.2021 TW 110104363
(43) Date of publication of application: 10.08.2022
(73) Proprietor: Microlife Corporation, Taipei City 114 (TW)
(72) Inventor: LIN, Chia-Ming, Taipei City 114 (CN)
(74) Representative: Gill Jennings & Every LLP

(56) References cited:
- CN-A- 112 082 656
- US-A1- 2003 099 277
- US-A1- 2008 246 625
- US-A1- 2011 118 608

## Description

### BACKGROUND OF THE INVENTION

### 1. Field of the Invention

The present invention relates to a non-contact infrared thermometer, in particular to a non-contact infrared thermometer using a time-of-flight sensor to obtain a proper actual temperature measurement in advance before a temperature measurement.

### 2. Description of Related Art

Non-contact infrared thermometers are widely used to measure human body temperatures. Their operation principle is to receive infrared rays emitted by the skin on the forehead or temples of the human body, and then convert it into the core body temperature of the human body through environmental temperature compensation. In this way, since the thermometer does not need to be in direct contact with a patient, the purpose of a safe, hygienic, and comfortable temperature measurement can be achieved. Especially for patients at rest, children prone to discomfort, or patients relying on hygienic temperature measurements, non-contact infrared thermometers can have the advantage of extremely high convenience in operation.

In order to allow users to more accurately measure body temperatures at an appropriate temperature measurement distance, the conventional non-contact infrared thermometer is equipped with an infrared distance sensor, which emits infrared rays towards the forehead of the object to be measured, and then receives some rays backward reflected from there. After the light energy of the received infrared rays is calculated, the actual temperature measurement distance is estimated. Finally, reminder means is used to prompt the user to position the non-contact infrared sensor at an appropriate/preset temperature measurement distance from operate the non-contact infrared thermometer, such as a forehead thermometer, to quickly measure accurate body temperatures (human core temperatures).

However, as the foregoing prior art such as US Patent No. 7,810,992 disclosed, an infrared distance sensor is used to determine the temperature measurement distance. Such existing prior art has the disadvantage that it cannot be applied to all kinds of people. For example, when non-black people is under measurement, the infrared distance sensor must be tuned and calibrated because more of infrared rays are reflected from their skin. If an infrared distance sensor is originally designed to be suitable for the non-black skin, however, let it measure the temperatures of black people. Since the magnitude of infrared rays reflected from the black skin is low in relative to the non-black skin, significant errors in the distance measurement will occur so that the actual temperature measurement distance cannot be obtained. As a result, the infrared sensor of the non-contact infrared thermometer cannot properly sense within a correct distance range, and accordingly there is an error in the measured body temperature.

Therefore, in the technical field of the non-contact infrared temperature measurement, one of main problems remaining to be solved is how to accurately measure an actual temperature measurement distance so that people of all skin colors can use the same non-contact infrared thermometer without further adjusting parameters or switching measurement modes.

US2011/118608A1 describes a system and method for detecting the temperature on a surface of a body without external interfering objects in the background of the body falsifying the measuring result, where the system uses a light spot projector for a user to visualise a point at which a first and/or second camera system of the temperature detection system is directed. CN112082656A describes a temperature determination method and device that calibrates a measured temperature value based on a mapping relationship. US2003/099277A1 describes an infrared thermometer that determines a correct positioning of the thermometer by use of a control means for generating at least two and preferably three light rays that converge in a pre-determined area to define a pre-set figure at a distance from a transducer of the thermometer.

### SUMMARY OF THE INVENTION

The scope of the invention is set out in the appended claims. In view of the deficiency of the current technology, the present application provides a non-contact infrared thermometer for measuring the temperature of a target area of an object to be measured so as to solve the current technical problem. The non-contact infrared thermometer comprises an infrared sensor; a time-of-flight sensor configured to measure an actual temperature measurement distance from the target area; and a microprocessor electrically connected to the infrared sensor and the time-of-flight sensor respectively; and a storage electrically connected to the microprocessor and configured to store a range of a predetermined temperature measurement distance; wherein, when the actual temperature measurement distance falls within the range of the predetermined temperature measurement distance, the infrared sensor measures the temperature of the target area of the object to be measured. Alternatively, when the actual temperature measurement distance falls within the range of the predetermined temperature measurement distance, the infrared sensor automatically measures the temperature of the target area of the object to be measured.

The present application provides a non-contact infrared thermometer for measuring the temperature of a target area of an object to be measured. The non-contact infrared thermometer comprises: an infrared sensor; a time-of-flight sensor configured to measure an actual temperature measurement distance from the target area; and a microprocessor electrically connected to the infrared sensor and the time-of-flight sensor respectively; and a storage electrically connected to the microprocessor and configured to store a predetermined temperature measurement distance; wherein, when the actual temperature measurement distance is greater than or equal to the predetermined temperature measurement distance, the infrared sensor measures the temperature of the target area of the object to be measured. Alternatively, when the actual temperature measurement distance is greater than or equal to the predetermined temperature measurement distance, the infrared sensor automatically measures the temperature of the target area of the object to be measured.

The non-contact infrared thermometer further comprises an alignment unit having a light-emitting element and an optical element, wherein, when the alignment unit projects an alignment mark on the target area, the infrared sensor automatically measures the temperature of the target area of the object to be measured.

The non-contact infrared thermometer further comprises a positioning unit electrically connected to the microprocessor to confirm that the time-of-flight sensor rightly faces the target area.

In order to sufficiently understand the essence, advantages and the preferred embodiments of the present application, the following detailed description will be more clearly understood by referring to the accompanying drawings. The drawings provided are only for reference and description, but do not limit the present application.

### BRIEF DESCRIPTION OF THE DRAWINGS

FIG. 1 is a block diagram showing the non-contact infrared thermometer according to the first example of the present application;
FIG. 2 is a perspective view showing the non-contact infrared thermometer according to the first example of the present application;
FIG. 3 is another perspective view showing the non-contact infrared thermometer according to the first example of the present application;
FIG. 4 is a schematic diagram showing a distance measurement conducted by the time-of-flight sensor according to the first example of the present application;
FIG. 5 is a block diagram showing the non-contact infrared thermometer according to a second embodiment of the present application;
FIG. 6 is a perspective view showing the non-contact infrared thermometer according to the second embodiment of the present application;
FIG. 7A is a schematic diagram showing the operation of non-contact infrared thermometer according to the second embodiment of the present application;
FIG. 7B is a schematically situational diagram showing that the non-contact infrared thermometer projects an alignment mark on the object to be measured according to the second embodiment of the present application;.
FIG. 7C is another schematically situational diagram showing that the non-contact infrared thermometer projects an alignment mark on the object to be measured according to the second embodiment of the present application;.
FIG. 8 is a block diagram showing the non-contact infrared thermometer according to the third embodiment of the present application;
FIG. 9 is a flow chart showing the operation of the non-contact infrared thermometer according to the second embodiment of the present application;
FIG. 10 is a flow chart showing the operation of the non-contact infrared thermometer according to the third embodiment of the present application.

### DETAILED DESCRIPTION OF THE INVENTION

The following description shows the preferred embodiments of the present invention. The present invention is described below by referring to the embodiments and the figures. Thus, the present invention is not intended to be limited to the embodiments shown, but is to be accorded the principles disclosed herein. Furthermore, that various modifications or changes in light thereof will be suggested to persons skilled in the art and are to be included within the spirit and purview of this application and scope of the appended claims.

It should be understood that although the terms "first", "second", "third" and other terms may be used herein to describe various elements or signals, these elements or signals should not be limited by these terms. These terms are mainly used to distinguish one element from another element, or one signal from another signal. In addition, the term "or" used in this document may include any one or a combination of some of relevantly listed items depending on their actual situations.

### [The first example]

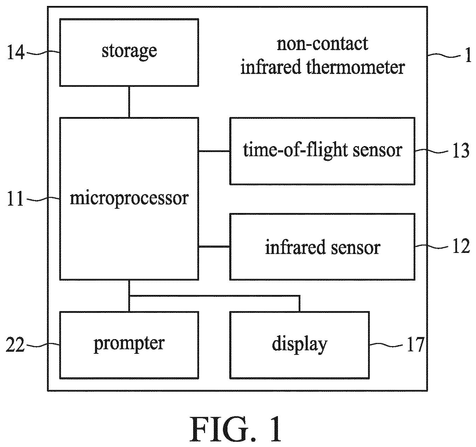

Referring to FIGS. 1 to 3, the first example of the present application provides a non-contact infrared thermometer 1, which is just illustrated as a gun-type forehead thermometer, but the present application does not limit the appearance of the forehead thermometer. The infrared sensor 12 detects the magnitude of infrared rays radiated from the target area F (in this embodiment, it may be the center of the forehead or near the center of the eyebrows, but may also be the skin near the temples or on the arteries) of the object T to be measured to determine the surface temperature of the target area. Furthermore, the microprocessor 11 is used to execute the algorithm or compensation factor stored in the storage (or memory) 14 to convert the measured forehead temperature into the core temperature. The above conversion method is applied to obtain the core temperature of the human body, and is well known in the prior art of forehead thermometers (with or without a gun shape). For example, as the prior art disclosed in European Patent Publication No. EP1530034, the details of which are not further discussed here.

As shown in FIG. 1, the circuit block diagram illustrates that a non-contact infrared thermometer 1 at least comprises a microprocessor 11, a infrared sensor 12, a time-of-flight sensor 13, a storage 14, a prompter 22, and a display 17. The microprocessor 11 is electrically connected to the infrared sensor 12, the time-of-flight sensor 13, the storage 14, the prompter 22, and the display 17 respectively. The infrared sensor 12 is used to measure the energy of infrared rays emitted from the target area F, such as the forehead, of the object T to be measured. The storage 14 stores the range of a predetermined temperature measurement distance. In addition, through the algorithm stored in the storage 14, the microprocessor 11 converts the measured infrared energy into the skin temperature of the forehead surface, and then converts the forehead surface temperature into the core body temperature. In other examples, the non-contact infrared thermometer 1 may also comprise a wireless data transmission module, such as a Bluetooth or WiFi module, to upload user data and temperature data to a cloud database to provide subsequent health data processing.

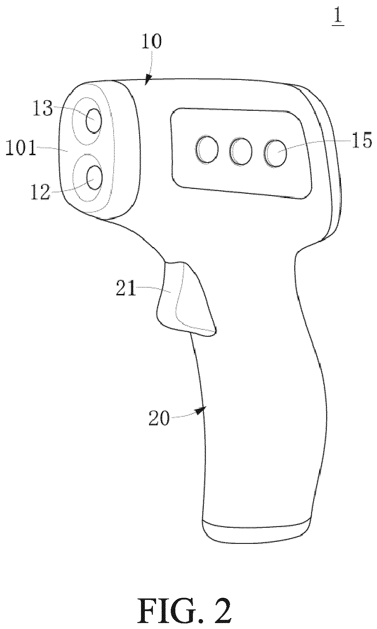

As shown in FIG. 2, the non-contact infrared thermometer 1 in this embodiment includes a head portion 10 and a holding portion 20. The infrared sensor 12 for measuring the magnitude of infrared rays radiated from the target area F of the object T to be measured is disposed on the end surface 101 of the head portion 10 of the non-contact infrared thermometer 1. The time-of-flight sensor 13 is also provided at the end surface 101 adjacent to the infrared sensor 12, and is used to measure the actual temperature measurement distance from the target area F (such as the forehead) of the object T to be measured. Since the actual temperature measurement distance is used to make the conversion more or the most accurate, which is from the magnitude of infrared rays measured by the infrared sensor 12 to the core body temperature of the object to be measured, the time-of-flight sensor 13 is preferably disposed at the same surface (i.e. the end surface 101) on which the infrared sensor 12 is located and adjacent to it. Consequently, the actual temperature measurement distance measured by the time-of-flight sensor 13 is equal to the distance between the infrared sensor 12 and the target area F of the object T to be measured. In other embodiments, the bottom of the holding portion 20 may be provided with a counterweight portion so that the non-contact infrared thermometer 1 maintains a balance and stands on a desktop, which is convenient for the user to easily access it.

The head portion 10 of the non-contact infrared thermometer 1 is provided with a power switch 15. When the user starts to operate the non-contact infrared thermometer 1, the user can press the power switch 15 to power the system circuit in the non-contact infrared thermometer. Moreover, after the time-of-flight sensor 13 measures the actual temperature measurement distance from the target area of the object T to be measured, and it is confirmed that the actual temperature measurement distance falls within the range of the predetermined temperature measurement distance, user's finger can press a start switch 21 on the holding portion 20. Accordingly, the microprocessor 11 sends an instruction to let the infrared sensor 12 sense the magnitude of infrared rays emitted from the target area F so as to measure the core body temperature of the object T to be measured. In other embodiments, the user does not need to press the start switch 21 on the holding portion 20, and the microprocessor 11 can automatically send another instruction to let the infrared sensor 12 sense the infrared radiation of the target area F. Thus, the core body temperature of the subject T to be measured is obtained. In this embodiment, the range of predetermined temperature measurement distance is from 9.5 to 10.5 cm, but the present application is not limited to this.

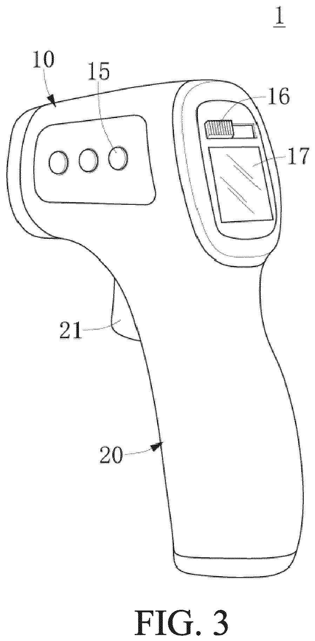

As shown in FIG. 3, a display 17 and a mode switch 16 are disposed on the other end surface of the head portion 10 of the non-contact infrared thermometer 1 far from the foregoing end surface. The display 17 can show various information, such as a measured distance, user information, the height of the object to be measured, temperature units, an ambient temperature, local time, and/or a fever warning (by red backlight) to help users operate the non-contact infrared thermometer 1, but the present application is not limited to this. For example, when the display 17 is fully lit, it can prompt the user that the power of the non-contact infrared thermometer 1 has been turned on. According to the actual temperature distance measured by the time-of-flight sensor 13, the display 17 displays the distance from prompt the user to change a distance between the contact infrared thermometer 1 and the target area of the object to be measured. After it is confirmed that the non-contact infrared thermometer 1 is located at the best or preferable actual temperature measurement distance D_{T}, the display 17 prompts the user to press the start switch 21 to perform a temperature Measurement. In this embodiment, in addition to the visual prompt, a prompter 22 is further provided to have ear auditory or hand tactile feedback, such as sound or vibration, to remind the user that the non-contact Infrared thermometer 1 can proceed with the temperature measurement at the best actual temperature measurement distance D_{T}.

Referring to FIG. 3, a mode switch 16 is provided above the display17. There are just two modes for the mode switch as illustrated here. The user is allowed to manually select one of two algorithms stored in the storage 14 of the non-contact infrared thermometer 1 by pushing the mode switch left or right. For example, when the user wants to measure the temperature of the human body, he can switch to the first algorithm so that the microprocessor 11 can access the first algorithm in the storage 14 to convert the human core body temperature from the measured infrared rays. For another example, when the user wants to measure the temperature of an object such as a milk bottle, he can switch to the second algorithm so that the microprocessor 11 can access the second algorithm in the storage 14 and convert the measured infrared rays into the temperature (close to the milk temperature) of the surface of the milk bottle.

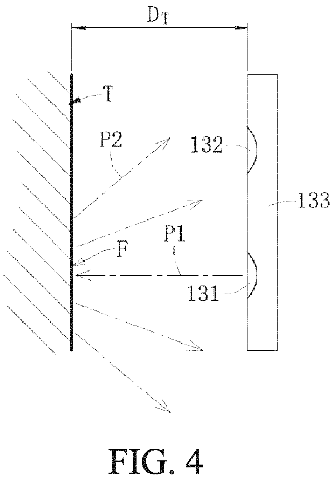

As shown in FIG. 4, the operation principle of the time-of-flight sensor 13 of the present invention is explained hereinafter. The time-of-flight sensor 13 comprises a radiation element 131, a sensing element 132 and a circuit board 133, wherein the radiation element 131 and the sensing element 132 are embedded in the circuit board 133. When the time-of-flight sensor 13 is active, the radiation element 131 emits the light beam P1 toward the target area of the object T to be measured. After the photons of the light beam P1 hit the surface of the target area, some of the photons of the reflected light beam P2 are received by the sensing element 132. The time-of-flight sensor 13 obtains the time difference between when the radiation element 131 emits the light beam P1 and when the sensor element 132 receives the photons of the light beam P2. Moreover, the known light speed and the measured time difference are further converted into the distance between the target area of the object T and the time-of-flight sensor 13. The distance can be substantially equivalent to the actual temperature measurement distance D_{T} between the infrared sensor 12 and the target area F of the object T to be measured. The calculation formula for the time-of-flight sensor 13 is: ${D}_{T} = \frac{t \times C}{2}$ (Formula 1) where D_{T} represents the actual temperature measurement distance D_{T}; t represents the time difference; C represents light speed.

### [The second embodiment]

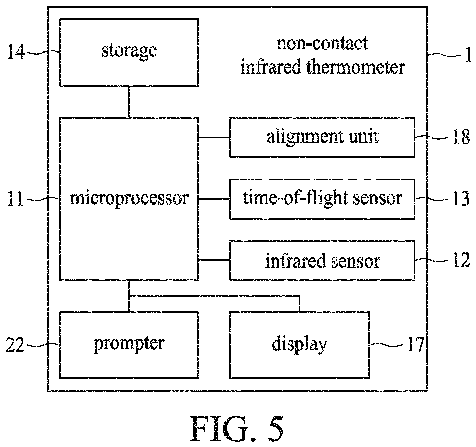

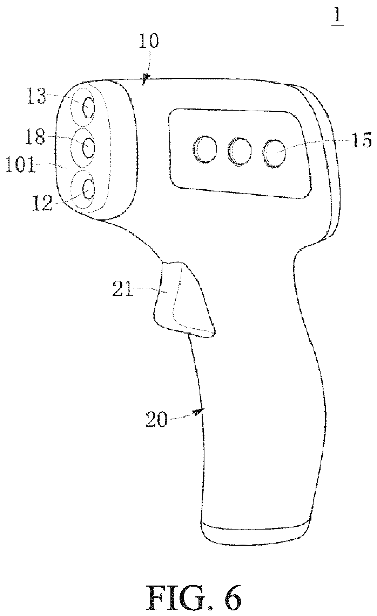

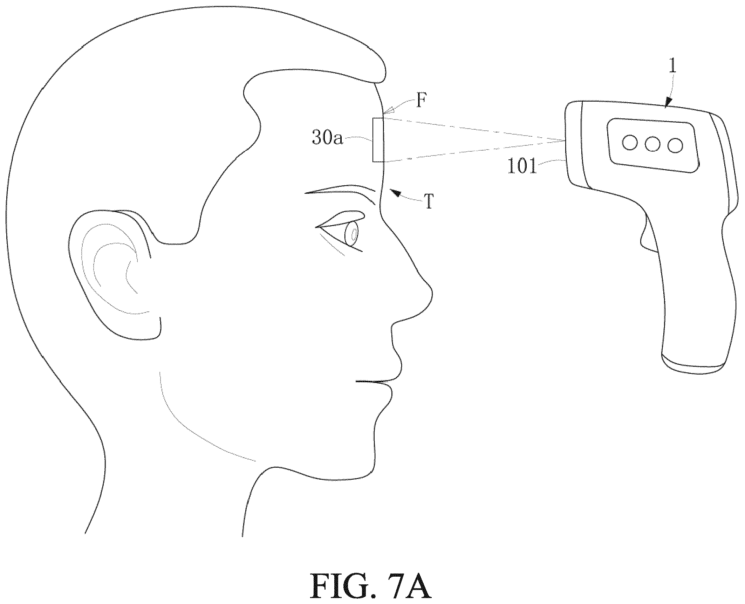

Referring to Figures 5 to 7C, the second embodiment of the present application provides a non-contact infrared thermometer 1. In addition to the whole configurations in the first embodiment, there is further alignment unit 18 disposed on the end surface 101 of the head portion 10 of the non-contact infrared thermometer 1. The alignment unit 18 has a light-emitting element and an optical element (not shown). The light-emitting element emits light, and it passes through the optical element to generate an alignment mark 30a. A proper alignment mark is projected or imaged on the target area, as shown in FIG. 7A. In addition, as shown in FIG. 5, the alignment unit 18 is electrically connected to the microprocessor 11. Before the time-of-flight sensor 13 of the non-contact infrared thermometer 1 measures the actual temperature measurement distance D_{T}, the user can press the start switch 21 on the holding part 20 for the first time. Accordingly, the microprocessor 11 accordingly activates the alignment unit 18 to project an alignment mark to help and prompt the user to align the non-contact infrared thermometer 1 on the target area F of the object T to be measured so as to improve the accuracy of the temperature measurement distance D_{T} measured by the time-of-flight sensor 13. More precisely speaking, the alignment unit 18 is used to ensure that the end surface 101 of the non-contact infrared thermometer 1 mutually and rightly faces the target area where the temperature measurement is to be performed so that the time-of-flight sensor 13 can emit/receive a light beam at a correct angle to the target area. Consequently, the accurate actual temperature measurement distance D_{T} can be adequately calculated. It should be particularly noted here that the time-of-flight sensor 13 provided on the end surface 101 measures the distance between the target area F for the body temperature measurement of the object T and the end surface 101 of the non-contact infrared thermometer 1. This distance is also the actual temperature measurement distance D_{T} for the infrared sensor 12. In an actual product design, the accuracy of the non-contact infrared thermometer 1 is limited by the specifications (effective measurement distance) of the infrared sensor 12 so as to obtain the temperature measurement distance which is going to be very important for measuring the core body temperature.

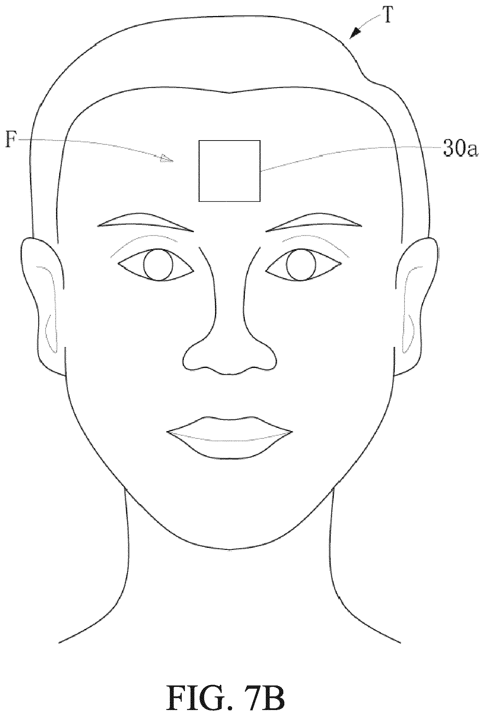

As shown in FIGS. 7A and 7B, before the time-of-flight sensor 13 measures the temperature measurement distance D₁, the alignment unit 18 images and projects an alignment mark 30a, which is a proper alignment mark, on the target area F (e.g., forehead) of the object T to be measured. In this embodiment, the shape of the proper alignment mark is, but not limited to, a square or a cross. In detail, if the user observes that the projected alignment mark 30a looks like a square as shown in FIG. 7B, it means that the end surface 101 of the non-contact infrared thermometer 1 mutually and rightly faces the target area of the object T to be measured so that the measured actual temperature measurement distance D_{T} is accordingly more accurate. Therefore, the time-of-flight sensor 13 allows the user to sufficiently have the best temperature measurement distance. The user can press the start switch 21 on the holding portion 20 for the second time to certainly receive the infrared rays emitted from the target area so as to obtain the most accurate core body temperature by conversion.

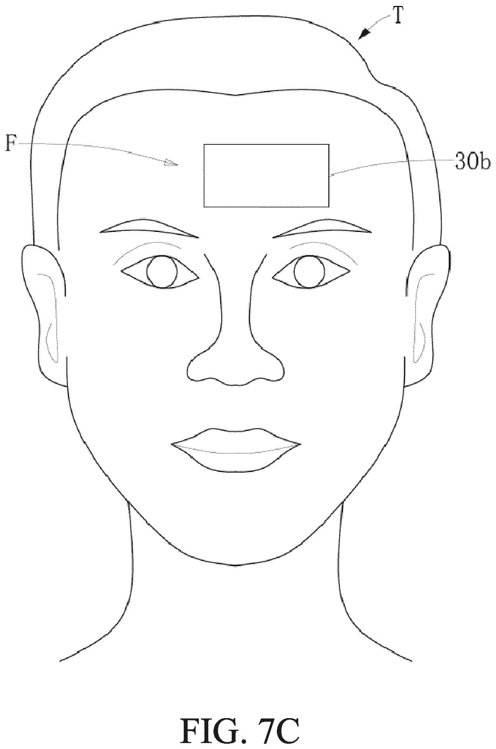

By contrast, if the user observes that the projected alignment mark 30b looks like rectangular as shown in FIG. 7C, it means that the end surface 101 of the non-contact infrared thermometer 1 and the target area of the object T to be measured do not rightly face each other. In this embodiment, the projected alignment mark 30b is not the proper alignment mark. In this regard, the measured actual temperature measurement distance will be inaccurate. For example, referring to FIG. 7C, it can be seen that the user holds and slants the non-contact infrared thermometer 1 to the right of an observer who views the object T to be measured. Accordingly, the non-contact infrared thermometer 1 may be moved to the left of the observer who views the object T to be measured to adjust the position of the end surface 101 in relative to the target area F. Thus, the projected alignment mark 30b will be changed into the projected alignment mark 30a (square) as shown in FIGS. 7A and 7B. When it looks like square, the next step of measuring the preferable actual temperature measurement distance D_{T} can be just performed. It is specifically explained here that as long as the projected alignment mark does not look like square, it means that the end surface 101 of the non-contact infrared thermometer 1 is not rightly opposite to the surface of the target area F of the object T to be measured. As long as the adjustment is back to a square, the operation of the temperature measurement can be continued.

### [The third embodiment]

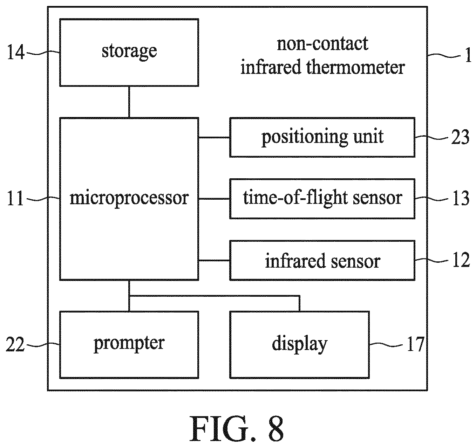

Referring to FIG. 8, the third embodiment of the present application provides a non-contact infrared thermometer 1. In addition to all the configurations in the above-mentioned first embodiment, a positioning unit 23 is additionally disposed on the holding portion 20 of the non-contact infrared thermometer 1. In this embodiment, the positioning unit 23 may be a gyro meter. In other embodiments, the positioning unit 23 may also be a gravity sensor (G-sensor) or an equivalent coordinate sensor. In this embodiment, the positioning unit 23 can be used to provide the information of any changes in the coordinate of the end surface 101 of the non-contact infrared thermometer 1. The positioning unit 23 is electrically connected to the microprocessor 11 to provide the microprocessor 11 with the information, such as coordinate, speed, displacement, and angle, of the non-contact infrared thermometer 1 for analysis/processing. Accordingly, the microprocessor 11 can further provide the user with feedbacks or prompts in sound, tactile or visual sensing through the prompter 22 and/or the display 17 to help the user properly position the non-contact infrared thermometer 1. In other embodiments, when the coordinate provided by the positioning unit 23 remains unchanged for a while, the non-contact infrared thermometer 1 enters the standby mode or will be turned off to save power consumption. In addition, the positioning unit can also replace the foregoing power switch. That is, when the coordinate provided after a period suddenly changes, the non-contact infrared thermometer 1 will be turned on.

The positioning unit 23 of this embodiment can help users not only position the end surface 101 of the non-contact infrared thermometer 1 to be rightly opposite to the surface of the target area of the object to be measured 1, but also position the non-contact infrared thermometer according to the reference coordinate to let the height/coordinate of the infrared thermometer 1 (or more specifically the end surface 101) from the ground plane be the same as those of the target area F of the object T to be measured. Thus, the user can be prompted to find the best actual temperature measurement distance D_{T} to obtain the most accurate infrared radiation magnitude, thereby converting it to the most accurate core body temperature.

### [Temperature measurement method of the second embodiment]

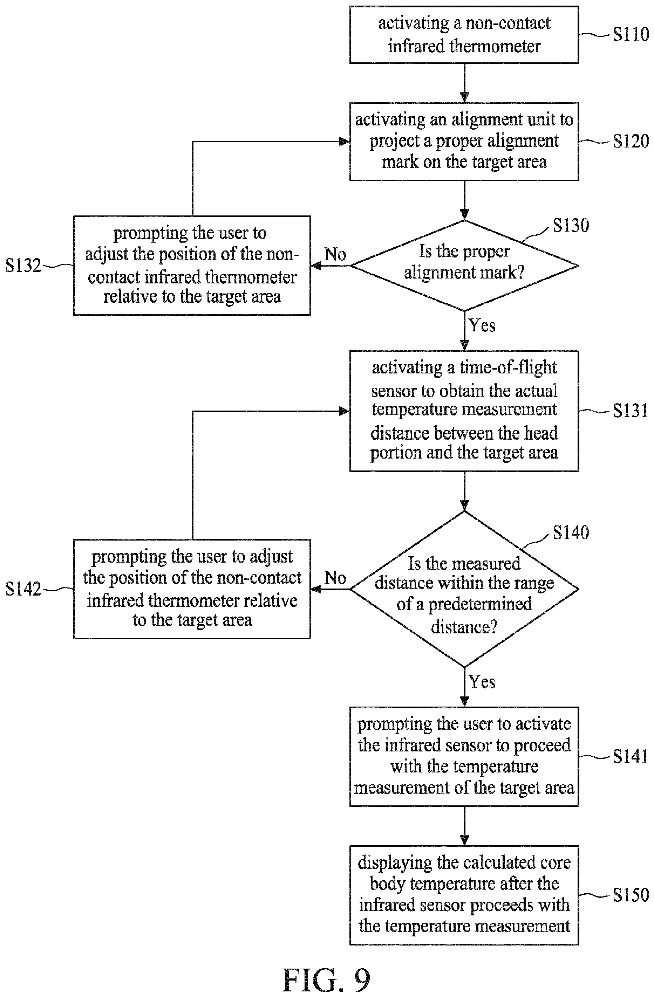

As shown in FIG. 9, it shows the flow chart the operation of the non-contact infrared thermometer 1 for the second embodiment of the present application. This embodiment just exemplifies that the user takes the temperature of the object to be measured, but the application is not limited to this. In step S110, the user activates the non-contact infrared thermometer 1 by pressing the power switch 15. In step S120, the alignment unit 18 of the non-contact infrared thermometer 1 projects a proper alignment mark on the target area F of the object T to be measured. In step S130, the user visually confirms whether he projected alignment mark is the proper alignment mark. If yes, go to step S131 to activate the time-of-flight sensor 13 to obtain the actual temperature measurement distance D_{T} between the head portion 10 (or more specifically the end surface 101) of the infrared thermometer and the target area F of the object T to be measured. If not, for example, when the user observes that the alignment mark projected from the alignment unit 18 looks like a rectangular, as the projected alignment mark 30b shown in FIG. 7C, go to step S132. In this regard, feedbacks or prompts are further provided to the user in sound, tactile or visual sensing through the prompter 22 and/or the display 17 to prompt the user to move and adjust the relative position of the non-contact infrared thermometer 1 and the target area F of the object T to be measured. Then, return to steps S120 and S130 to re-determine whether the projected alignment mark looks like square (the alignment mark 30a as shown in Figure 7B).

In step S140 after step S131, based on the actual temperature measurement distance D_{T} measured by the time-of-flight sensor 13, the microprocessor 11 determines whether the measured distance falls within the range of a predetermined distance stored in the storage 13. If yes, go to step S141. After receiving the visual, auditory, and tactile feedback provided by the microprocessor 11 through the display 17 or the prompter 22, the user activates the infrared sensor 12 to proceed with the temperature measurement of the target area by pressing the start switch 21. If not, go to step S142. Feedbacks are further provided to the user in sound, tactile or visual sensing through the prompter 22 and/or the display 17 to prompt the user to adjust the relative positions of the non-contact infrared thermometer 1 and the target area F of the object T to be measured. Then, return to steps S131 and S140 to re-determine whether the current temperature measurement distance falls within the range of a predetermined distance. In other embodiments, steps S120, S130, S131, S132, S140, and S142 can be integrated into one step or less steps and performed simultaneously. That is, it is determined whether the alignment and distance are correct at the same time, but the present application is not limited to this.

In addition, in other embodiments, the non-contact infrared thermometer 1 may also include a clock and a timer. When steps S131, S140, S141, and S142 are mutually integrated and simultaneously performed together with the operation of the clock and timer, In this regard, when the current temperature measurement distance falls within the range of a predetermined distance for a certain period, some data automatically and continuously measured by the infrared sensor 12 within the period and the average or the maximum of the data is obtained. Then, go to next step S150 (described later).

In step S150 after step S141, based on the temperature data measured by the infrared sensor 12, the microprocessor 11 calculates the surface temperature from the magnitude of received infrared, and then converts it to the core body temperature through the ambient temperature compensation/conversion. Afterward, the calculated core body temperature is shown on the display 17. Thus, the non-contact infrared thermometer finishes whole the operation of the temperature measurement.

### [Temperature measurement method of the third embodiment]

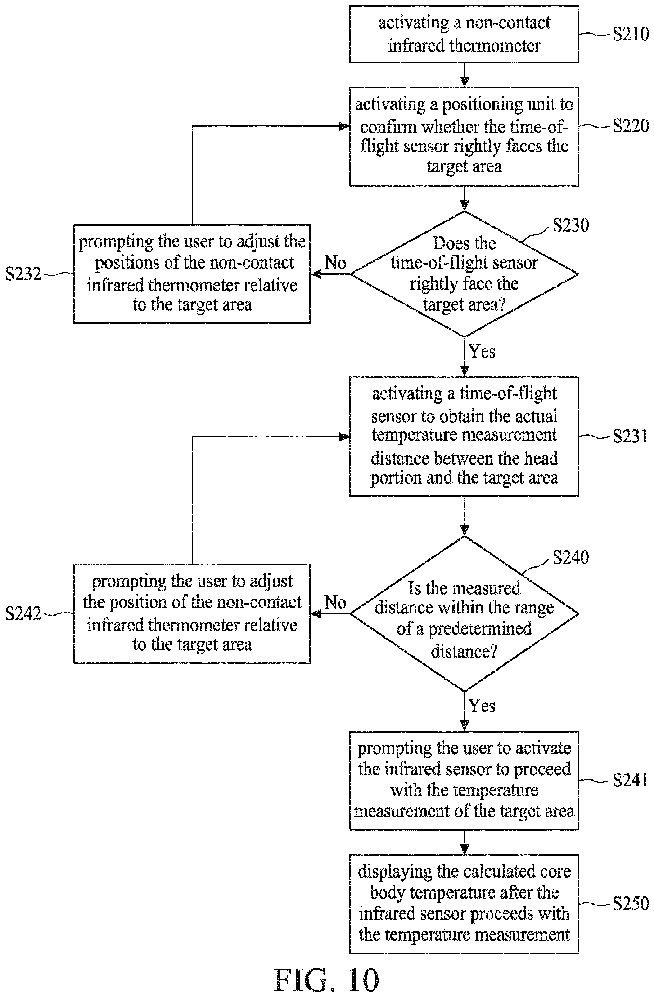

As shown in FIG. 10, it shows the flow chart the operation of the non-contact infrared thermometer 1 for the third embodiment of the present application. This embodiment just exemplifies that the user takes the temperature of the object to be measured, but the application is not limited to this. In step S210, the user activates the non-contact infrared thermometer 1 by pressing the power switch 15. In step S220, the positioning unit 23 of the non-contact infrared thermometer 1 is activated to further confirm whether the time-of-flight sensor 13 rightly faces the target area. It is specifically stated here that the subject T to be measured may stand or sit for self-measurement. In step S230, the microprocessor 11 determines whether the time-of-flight sensor 13 rightly faces the target area according to the data measured by the positioning unit 23.

If yes, go to step S231. Accordingly, the time-of-flight sensor 13 is activated to obtain actual temperature measurement distance D_{T} between the head portion 10 (or more specifically the end surface 101) of the infrared thermometer and the target area of the object to be measured. However, if not, go to step S232. The display 17 or the prompter 22 provides visual, auditory, and or feedback, and prompts the user of the non-contact infrared thermometer 1 to immediately adjust the position of the end surface 101 in relative to the target area F of the object T to be measured. Then, return to steps S220 and S230 to re-determine whether the time-of-flight sensor rightly faces the target area of the object to be measured.

In step S240 after step S231, based on the actual temperature measurement distance D_{T} measured by the time-of-flight sensor 13, the microprocessor 11 determines whether the measured distance falls within the range of a predetermined distance stored in the storage 13. If yes, go to step S241. After receiving the visual, auditory, and tactile feedback provided by the microprocessor 11 through the prompter 22, the user activates the infrared sensor 12 to proceed with the temperature measurement of the target area by pressing the start switch 21. If not, go to step S242. Feedbacks are further provided to the user in sound, tactile or visual sensing through the prompter 22 to prompt the user to adjust the relative position of the non-contact infrared thermometer 1 and the target area F of the object T to be measured. Then, return to steps S231 and S240 to re-determine whether the current temperature measurement distance falls within the range of a predetermined distance. In other embodiments, steps S220, S230, S231, S232, S240, and S42 can be integrated into one step or less steps and performed simultaneously. That is, it is determined whether the alignment and distance are correct at the same time, but the present application is not limited to this.

In step S250 after step S241, based on the temperature data measured by the infrared sensor 12, the microprocessor 11 calculates the surface temperature from the magnitude of received infrared, and then converts it to the core body temperature through the ambient temperature compensation/conversion. Afterward, the calculated core body temperature is shown on the display 17.

It is particularly explained here that the steps S140 and S240 discussed in the foregoing two operation methods, the microprocessor 11 determines whether the actual temperature measurement distance falls within the range of a predetermined temperature measurement distance stored in the storage 14. Alternatively, it can also be determined whether the actual temperature measurement distance is greater than or equal to the predetermined temperature measurement distance stored in the storage 14. Such determination depends on actual design requirements, but the present application is not limited to this. In this embodiment, the predetermined temperature measurement distance is 10 cm, but the present application is not limited to this, and the measurement distance can be adjusted according to actual design requirements.

### [Beneficial effects of the embodiments]

One of the beneficial effects of the present application is that the non-contact infrared thermometer provided by the present application can enable the non-contact infrared thermometer to obtain an accurate measurement distance through the technical solution of "the setting of a time-of-flight sensor". Furthermore, the final temperature will not be affected by the factors of the object to be measured with different skin colors, which will affect the accuracy of the whole temperature measurement.

Another beneficial effect of the present application is that the non-contact infrared thermometer provided by the present application can enable the non-contact infrared thermometer to adjust the position of the time-of-flight sensor in relative to that of the target area before the time-of-flight sensor starts to measure a distance through the technical solution of "the setting of the alignment unit" or "the setting of the positioning unit". Consequently, the accuracy of the distances measured by the time-of-flight sensor is quite improved.

## Claims

1. A non-contact infrared thermometer (1) for measuring a temperature of a target area (F) of an object (T) to be measured, the non-contact infrared thermometer (1) comprising:
an infrared sensor (12) sensing infrared rays emitted from the target area (F);
a time-of-flight sensor (13) measuring an actual temperature measurement distance (D_{T}) from the target area (F);
a microprocessor (11) electrically connected to the infrared sensor (12) and the time-of-flight sensor (13) respectively; and
a storage (14) electrically connected to the microprocessor (11) and configured to store a range of a predetermined temperature measurement distance,
wherein, when the actual temperature measurement distance (D_{T}) falls within the range of the predetermined temperature measurement distance, the infrared sensor (12) measures the temperature of the target area (F) of the object (T) to be measured;
wherein the actual temperature measurement distance (D_{T}) is a light flight interval multiplied by light speed and then divided by 2,
wherein the non-contact infrared thermometer further comprises:
an alignment unit (18) including a light-emitting element and an optical element, wherein the light-emitting element is configured to emit light which passes through the optical element to project an alignment mark (30a) on the target area (F) to confirm that the time-of-flight sensor (13) rightly faces, and is arranged to emit and receive a light beam at a correct angle to, the target area (F) if a shape of the projected alignment mark (30a) is substantially the same as a shape of a predetermined alignment mark on the target area (F), wherein the shape of the predetermined alignment mark is a square.

2. The non-contact infrared thermometer (1) according to claim 1, wherein the microprocessor (11) automatically send an instruction to let the infrared sensor (12) sense the infrared rays emitted from the target area (F) of the object (T) to be measured.

3. The non-contact infrared thermometer (1) according to claim 1, further comprising:
a head portion (10) on whose side surface the infrared sensor (12), the time-of-flight sensor (13), and the alignment unit (18) are disposed; and
a holding portion (20) connected to the head portion (10) and encompassing the microprocessor (11) and the storage (14).

4. The non-contact infrared thermometer (1) according to claim 1, further comprising:
a positioning unit (23) electrically connected to and providing the microprocessor (11) with a coordinate, speed, displacement, and/or angle of the non-contact infrared thermometer (1) to confirm that the time-of-flight sensor (13) rightly faces the target area (F), wherein the positioning unit (23) is a gravity sensor or a coordinate sensor.

5. The non-contact infrared thermometer (1) according to claim 4, further comprising:
a head portion (10) on whose side surface the infrared sensor (12), and the time-of-flight sensor (13) are disposed; and
a holding portion (20) connected to the head portion (10) and encompassing the microprocessor (11), the storage (14), and the positioning unit (23).

6. The non-contact infrared thermometer (1) according to claim 1, wherein the range of predetermined temperature measurement distance is from 9.5 to 10.5 cm.

7. The non-contact infrared thermometer (1) according to claim 1, wherein the time-of-flight sensor (13) comprises:
a radiation element (131) configured to emit photons toward the target area (F);
a sensing element (132) configured to receive some of the photons reflected by the target area (F); and
a circuit board (133) in which the radiation element (131) and the sensing element (132) are coplanarly embedded.

8. The non-contact infrared thermometer (1) according to claim 1, further comprising a prompter (22) providing prompts in sound, tactile or visual sensing.

9. The non-contact infrared thermometer (1) according to claim 1, further comprising a display (17) providing feedbacks in visual sensing.

10. A temperature measurement method for using a non-contact infrared thermometer (1) according to claim 1 to measure a temperature of a target area (F) of an object (T) to be measured, wherein the temperature measurement method comprises the steps of:
activating the non-contact infrared thermometer (1);
confirming that the non-contact infrared thermometer (1) rightly faces the target area (F);
activating the time-of-flight sensor (13) to obtain the actual temperature measurement distance (D_{T}) from the target area (F), wherein the actual temperature measurement distance (D_{T}) is a light flight interval multiplied by light speed and then divided by 2; and
measuring the temperature of the target area (F) of the object (T) to be measured when the actual temperature measurement distance (D_{T}) falls within the range of the predetermined temperature measurement distance.

11. The temperature measurement method of according to claim 10, wherein the step of confirming that the non-contact infrared thermometer (1) rightly faces the target area (F) further comprises the steps of:
projecting the alignment mark (30a) on the target area (F) of the object (T) to be measured; and
confirming that the projected alignment mark (30a) on the target area (F) looks substantially the same as the predetermined alignment mark.

12. The temperature measurement method of according to claim 10, wherein the non-contact infrared thermometer (1) includes a positioning unit (23) which is used to confirm that the non-contact infrared thermometer (1) rightly faces the target area and provide the microprocessor (11) with a coordinate, speed, displacement, and/or angle of the non-contact infrared thermometer (1).

13. The temperature measurement method of according to claim 12, further comprising the steps of:
providing feedbacks or prompts in sound, tactile or visual sensing for adjusting the position of the non-contact infrared thermometer (1) relative to the target area (F) when the non-contact infrared thermometer (1) does not rightly face the target area (F).

## Patentansprüche

1. Berührungsloses Infrarotthermometer (1) zum Messen einer Temperatur einer Zielfläche (F) eines zu messenden Objekts (T), wobei das berührungslose Infrarotthermometer (1) Folgendes umfasst:
einen Infrarotsensor (12), der Infrarotstrahlen, die von der Zielfläche (F) abgegeben werden, erfasst;
einen Flugzeitsensor (13), der eine tatsächliche Temperaturmessentfernung (D_{T}) zu der Zielfläche (F) misst;
einen Mikroprozessor (11), der jeweils mit dem Infrarotsensor (12) und dem Flugzeitsensor (13) elektrisch verbunden ist; und
einen Speicher (14), der mit dem Mikroprozessor (11) elektrisch verbunden ist und konfiguriert ist, einen Bereich einer vorbestimmten Temperaturmessentfernung zu speichern,
wobei, wenn die tatsächliche Temperaturmessentfernung (D_{T}) innerhalb des Bereichs der vorbestimmten Temperaturmessentfernung fällt, misst der Infrarotsensor (12) die Temperatur der Zielfläche (F) des zu messenden Objekts (T);
wobei die tatsächliche Temperaturmessentfernung (D_{T}) ein Lichtflugintervall, multipliziert mit der Lichtgeschwindigkeit und dann geteilt durch 2 ist,
wobei das berührungslose Infrarotthermometer weiter Folgendes umfasst:
eine Ausrichtungseinheit (18), die ein lichtemittierendes Teil und ein optisches Teil einschließt, wobei das lichtemittierende Teil konfiguriert ist, Licht abzugeben, das durch das optische Teil hindurchgeht, um eine Ausrichtungsmarkierung (30a) auf die Zielfläche (F) zu projizieren, um zu bestätigen, dass der Flugzeitsensor (13) richtig auf die Zielfläche (F) gerichtet ist, und angeordnet ist, um einen Lichtstrahl in einem korrekten Winkel zu dieser abzugeben und zu empfangen, wenn eine Form der projizierten Ausrichtungsmarkierung (30a) im Wesentlichen mit einer Form einer vorbestimmten Ausrichtungsmarkierung auf der Zielfläche (F) übereinstimmt, wobei die Form der vorbestimmten Ausrichtungsmarkierung ein Quadrat ist.

2. Berührungsloses Infrarotthermometer (1) nach Anspruch 1, wobei der Mikroprozessor (11) automatisch eine Anweisung überträgt, um den Infrarotsensor (12) zu veranlassen, die von der Zielfläche (F) des zu messenden Objekts (T) abgegebenen Infrarotstrahlen zu erfassen.

3. Berührungsloses Infrarotthermometer (1) nach Anspruch 1, weiter umfassend:
einen Kopfabschnitt (10), an dessen Seitenfläche der Infrarotsensor (12), der Flugzeitsensor (13) und die Ausrichtungseinheit (18) angeordnet sind; und
einen Halteabschnitt (20), der mit dem Kopfabschnitt (10) verbunden ist und den Mikroprozessor (11) und den Speicher (14) umschließt.

4. Berührungsloses Infrarotthermometer (1) nach Anspruch 1, weiter umfassend:
eine Positioniereinheit (23), die elektrisch mit dem Mikroprozessor (11) verbunden ist und diesem eine Koordinate, Geschwindigkeit, Verschiebung und/oder Winkel des berührungslosen Infrarotthermometers (1) bereitstellt, um zu bestätigen, das der Flugzeitsensor (13) richtig auf die Zielfläche (F) gerichtet ist, wobei die Positioniereinheit (23) ein Schwerkraftsensor oder ein Koordinatensensor ist.

5. Berührungsloses Infrarotthermometer (1) nach Anspruch 4, weiter umfassend:
einen Kopfabschnitt (10), an dessen Seitenfläche der Infrarotsensor (12) und der Flugzeitsensor (13) angeordnet sind; und
einen Halteabschnitt (20), der mit dem Kopfabschnitt (10) verbunden ist und den Mikroprozessor (11), den Speicher (14) und die Positioniereinheit (23) umschließt.

6. Berührungsloses Infrarotthermometer (1) nach Anspruch 1, wobei der Bereich der vorbestimmten Temperaturmessentfernung von 9,5 bis 10,5 cm beträgt.

7. Berührungsloses Infrarotthermometer (1) nach Anspruch 1, wobei der Flugzeitsensor (13) Folgendes umfasst:
ein Strahlungsteil (131), das konfiguriert ist, Photonen in Richtung der Zielfläche (F) abzugeben;
ein Abtastteil (132), das konfiguriert ist, einige der Photonen, die von der Zielfläche (F) reflektiert werden, zu empfangen; und
eine Leiterplatte (133), in der das Strahlungsteil (131) und das Abtastteil (132) komplanar eingebettet sind.

8. Berührungsloses Infrarotthermometer (1) nach Anspruch 1, weiter umfassend einen Prompter (22), der beim akustischen, taktilen oder visuellen Abtasten Aufforderungen bereitstellt.

9. Berührungsloses Infrarotthermometer (1) nach Anspruch 1, weiter umfassend eine Anzeige (17), die beim visuellen Abtasten Rückmeldungen bereitstellt.

10. Temperaturmessverfahren zum Verwenden eines berührungslosen Infrarotthermometers (1) nach Anspruch 1, um eine Temperatur einer Zielfläche (F) eines zu messenden Objekts (T) zu messen, wobei das Temperaturmessverfahren die folgenden Schritte umfasst:
Aktivieren eines berührungslosen Infrarotthermometers (1)
Bestätigen, dass das berührungslose Infrarotthermometer (1) richtig auf die Zielfläche (F) gerichtet ist;
Aktivieren des Flugzeitsensors (13), um die tatsächliche Temperaturmessentfernung (D_{T}) zu der Zielfläche (F) zu erhalten, wobei die tatsächliche Temperaturmessentfernung (D_{T}) ein Lichtflugintervall, multipliziert mit der Lichtgeschwindigkeit und dann geteilt durch 2 ist; und
Messen der Temperatur der Zielfläche (F) des zu messenden Objekts (T), wenn die tatsächliche Temperaturmessentfernung (D_{T}) innerhalb des Bereichs der vorbestimmten Temperaturmessentfernung fällt.

11. Temperaturmessverfahren nach Anspruch 10, wobei der Schritt des Bestätigens, dass das berührungslose Infrarotthermometer (1) richtig auf die Zielfläche (F) gerichtet ist, die folgenden Schritte umfasst:
Projizieren der Ausrichtungsmarkierung (30a) auf die Zielfläche (F) des zu messenden Objekts (T); und
Bestätigen, dass die projizierte Ausrichtungsmarkierung (30a) auf der Zielfläche (F) im Wesentlichen wie die vorbestimmte Ausrichtungsmarkierung aussieht.

12. Temperaturmessverfahren nach Anspruch 10, wobei das berührungslose Infrarotthermometer (1) eine Positioniereinheit (23) einschließt, die verwendet wird, um zu bestätigen, dass das berührungslose Infrarotthermometer (1) richtig auf die Zielfläche gerichtet ist, und dem Mikroprozessor (11) eine Koordinate, Geschwindigkeit, Verschiebung und/oder Winkel des berührungslosen Infrarotthermometers (1) bereitzustellen.

13. Temperaturmessverfahren nach Anspruch 12, weiter umfassend die folgenden Schritte:
Bereitstellen von Rückmeldungen oder Aufforderungen beim akustischen, taktilen oder visuellen Abtasten, um die Position des berührungslosen Infrarotthermometers (1) in Bezug auf die Zielfläche (F) anzupassen, wenn das berührungslose Infrarotthermometer (1) nicht richtig auf die Zielfläche (F) gerichtet ist.

## Revendications

1. Thermomètre à infrarouges sans contact (1) destiné à mesurer une température d'une zone cible (F) d'un objet (T) à mesurer, le thermomètre à infrarouges sans contact (1) comprenant :
un capteur infrarouge (12) détectant des rayons infrarouges émis depuis la zone cible (F) ;
un capteur de temps de vol (13) mesurant une distance de mesure de température réelle (D_{T}) depuis la zone cible (F) ;
un microprocesseur (11) relié électriquement au capteur infrarouge (12) et au capteur de temps de vol (13) respectivement ; et
une mémoire (14) reliée électriquement au microprocesseur (11) et configurée pour mémoriser une plage d'une distance de mesure de température prédéterminée,
dans lequel, lorsque la distance de mesure de température réelle (D_{T}) tombe dans la plage de la distance de mesure de température prédéterminée, le capteur infrarouge (12) mesure la température de la zone cible (F) de l'objet (T) à mesurer ;
dans lequel la distance de mesure de température réelle (D_{T}) est un temps de vol de la lumière multiplié par la vitesse de la lumière puis divisé par 2,
dans lequel le thermomètre à infrarouges sans contact comprend en outre :
une unité d'alignement (18) incluant un élément émetteur de lumière et un élément optique, dans laquelle l'élément émetteur de lumière est configuré pour émettre une lumière qui passe à travers l'élément optique pour projeter une marque d'alignement (30a) sur la zone cible (F) pour confirmer que le capteur de temps de vol (13) est correctement orienté vers, et est agencé pour émettre et recevoir un faisceau lumineux selon un angle correct par rapport à, la zone cible (F) si une forme de la marque d'alignement projetée (30a) est sensiblement la même qu'une forme d'une marque d'alignement prédéterminée sur la zone cible (F), dans lequel la forme de la marque d'alignement prédéterminée est un carré.

2. Thermomètre à infrarouges sans contact (1) selon la revendication 1, dans lequel le microprocesseur (11) envoie automatiquement une instruction pour amener le capteur infrarouge (12) à détecter les rayons infrarouges émis par la zone cible (F) de l'objet (T) à mesurer.

3. Thermomètre à infrarouges sans contact (1) selon la revendication 1, comprenant en outre :
une portion de tête (10) sur la surface latérale de laquelle le capteur infrarouge (12), le capteur de temps de vol (13), et l'unité d'alignement (18) sont disposés ; et
une portion de préhension (20) reliée à la portion de tête (10) et englobant le microprocesseur (11) et la mémoire (14).

4. Thermomètre à infrarouges sans contact (1) selon la revendication 1, comprenant en outre :
une unité de positionnement (23) reliée électriquement au microprocesseur (11) et lui fournissant une coordonnée, une vitesse, un déplacement, et/ou un angle du thermomètre à infrarouges sans contact (1) pour confirmer que le capteur de temps de vol (13) est correctement orienté vers la zone cible (F), dans lequel l'unité de positionnement (23) est un capteur de gravité ou un capteur de coordonnées.

5. Thermomètre à infrarouges sans contact (1) selon la revendication 4, comprenant en outre :
une portion de tête (10) sur la surface latérale de laquelle le capteur infrarouge (12), et le capteur de temps de vol (13) sont disposés ; et
une portion de préhension (20) reliée à la portion de tête (10) et englobant le microprocesseur (11), la mémoire (14), et l'unité de positionnement (23).

6. Thermomètre à infrarouges sans contact (1) selon la revendication 1, dans lequel la plage de la distance de mesure de température prédéterminée va de 9,5 à 10,5 cm.

7. Thermomètre à infrarouges sans contact (1) selon la revendication 1, dans lequel le capteur de temps de vol (13) comprend :
un élément de rayonnement (131) configuré pour émettre des photons vers la zone cible (F) ;
un élément de détection (132) configuré pour recevoir certains des photons réfléchis par la zone cible (F) ; et
une carte de circuit (133) dans laquelle l'élément de rayonnement (131) et l'élément de détection (132) sont intégrés de manière coplanaire.

8. Thermomètre à infrarouges sans contact (1) selon la revendication 1, comprenant en outre un dispositif d'invite (22) fournissant des invites sous forme sonore, tactile ou visuelle.

9. Thermomètre à infrarouges sans contact (1) selon la revendication 1, comprenant en outre un afficheur (17) fournissant des retours d'information sous forme visuelle.

10. Procédé de mesure de température pour utiliser un thermomètre à infrarouges sans contact (1) selon la revendication 1 afin de mesurer une température d'une zone cible (F) d'un objet (T) à mesurer, dans lequel le procédé de mesure de température comprend les étapes consistant à :
activer le thermomètre à infrarouges sans contact (1) ;
confirmer que le thermomètre à infrarouges sans contact (1) est correctement orienté vers la zone cible (F) ;
activer le capteur de temps de vol (13) pour obtenir la distance de mesure de température réelle (D_{T}) depuis la zone cible (F), dans lequel la distance de mesure de température réelle (D_{T}) est un temps de vol de la lumière multiplié par la vitesse de la lumière puis divisé par 2 ; et
mesurer la température de la zone cible (F) de l'objet (T) à mesurer lorsque la distance de mesure de température réelle (D_{T}) tombe dans la plage de la distance de mesure de température prédéterminée.

11. Procédé de mesure de température selon la revendication 10, dans lequel l'étape consistant à confirmer que le thermomètre à infrarouges sans contact (1) est correctement orienté vers la zone cible (F) comprend en outre les étapes consistant à :
projeter la marque d'alignement (30a) sur la zone cible (F) de l'objet (T) à mesurer ; et
confirmer que la marque d'alignement (30a) projetée sur la zone cible (F) semble sensiblement la même que la marque d'alignement prédéterminée.

12. Procédé de mesure de température selon la revendication 10, dans lequel le thermomètre à infrarouges sans contact (1) inclut une unité de positionnement (23) qui est utilisée pour confirmer que le thermomètre à infrarouges sans contact (1) est correctement orienté vers la zone cible et pour fournir au microprocesseur (11) une coordonnée, une vitesse, un déplacement, et/ou un angle du thermomètre à infrarouges sans contact (1).

13. Procédé de mesure de température selon la revendication 12, comprenant en outre les étapes consistant à :
fournir des retours d'information ou des invites sous forme sonore, tactile ou visuelle pour ajuster la position du thermomètre à infrarouges sans contact (1) par rapport à la zone cible (F) lorsque le thermomètre à infrarouges sans contact (1) n'est pas correctement orienté vers la zone cible (F).
